# EUROPÄISCHE PATENTANMELDUNG

(11) **EP 1 361 736 A1**
(43) Veröffentlichungstag der Anmeldung: **12.11.2003**
(21) Anmeldenummer: 03009763.8
(22) Anmeldetag: 06.05.2003
(51) Int. Cl.: H04M 3/51, H04M 3/493, G10L 15/26

(54) **Verfahren zur Erkennung von Sprachinformation**

(30) Priorität: 08.05.2002 DE 10220520
(71) Anmelder: SAP Aktiengesellschaft, 69190 Walldorf (DE)
(72) Erfinder: Geppert, Nicolas Andre, 68789 St. Leon-Rot (DE); Sattler, Jürgen, 69168 Wiesloch (DE)

(57) **Zusammenfassung**

Die vorliegende Erfindung betrifft Verfahren zur Erkennung von Sprachinformationen aus einem Gespräch zwischen mindestens zwei Gesprächspartnern (1, 2) oder zwischen einem Gesprächspartner (1) und einem Gesprächsannahmesystem (7), wobei die Sprachdaten des Gesprächs einem Spracherkennungssystem (5) zugeführt werden, und ist zur Optimierung des Gesprächsdurchsatzes wobei zumindest teilweise eine Untermenge der Sprachdaten erkannt und extrahiert werden und dass Informationen als Ergebnis der Spracherkennung einem Gesprächspartner (2) zur Verfügung gestellt und/oder gespeichert werden.

## Beschreibung

Die vorliegende Erfindung betrifft ein Verfahren zur Erkennung von Sprachinformationen aus einem Gespräch zwischen mindestens zwei Gesprächspartnern oder zwischen einem Gesprächspartner und einem Gesprächsannahmesystem, wobei die Sprachdaten des Gesprächs einem Spracherkennungssystem zugeführt werden.

Die automatische Spracherkennung ist seit geraumer Zeit aus der Praxis bekannt und wird zur maschinellen Umsetzung gesprochener Sprache in geschriebenen Text eingesetzt.

Spracherkennungssysteme lassen sich nach der räumlichenzeitlichen Verknüpfung von Sprachaufnahme und Sprachverarbeitung in zwei Gruppen unterteilen.
- "Online-Erkenner" sind Spracherkennungssysteme, die gesprochene Äußerungen unmittelbar in geschriebenen Text umsetzen. Hierzu zählen die meisten Bürodiktiersysteme.
- "Offline-Erkennungssysteme" führen eine zeitversetzte Spracherkennung zu einer Diktataufzeichnung durch, die der Anwender beispielsweise mit einem digitalen Aufzeichnungsgerät angelegt hat.

Die bislang aus dem Stand der Technik bekannten sprachverarbeitenden Systeme können keine sprachlichen Inhalte verstehen, d.h. es können nicht wie beim menschlichen Sprachverstehen intelligente Hypothesen über das gesagte a priori gebildet werden. Statt dessen wird der akustische Erkennungsprozess durch das Heranziehen von text-. oder anwendungsspezifischen Hypothesen unterstützt. Die folgenden Hypothesen bzw. Erkennungsmodi sind bislang verbreitet:
- die Diktat- bzw. Vokabular-Erkennung bedient sich einer Verknüpfung von domänenspezifischer Wortstatistik und Wortschätzen. Die Diktat- bzw. Vokabel-Erkennung findet bei Bürodiktiersystemen Anwendung;
- die Grammatikerkennung stützt sich auf anwendungsspezifisch gestaltete Regelsysteme, integriert hierbei erwartete Satzbaupläne unter Verwendung von Variablen;
- die Einzelworterkennung bzw. Keyword-Spotting wird dann eingesetzt, wenn erkennungsunterstützende Sprachdaten fehlen und wenn innerhalb längerer Sprachpassagen einzelne festgelegte Schlüsselwörter erwartet werden.

Spracherkennungssysteme sind insbesondere hinsichtlich der Erkennung der Sprachinformation aufgrund der von Person zu Person unterschiedlichen Aussprache problematisch, wenn das Spracherkennungssystem nicht im Rahmen einer Lernphase auf die konkrete Aussprache einer Person eingestellt ist. Insbesondere Gesprächsannahmesysteme, bei denen ein Gesprächspartner eine Information erfragt oder eine Information abgibt, sind aufgrund der hohen Fehlerrate beim Spracherkennungsprozess und der unterschiedlichen Reaktion der einzelnen Gesprächspartner noch nicht praktikabel. Daher ist es bei vielen Anwendungen immer noch zwingend notwendig, anstelle eines Gesprächsannahmesystems einen zweiten Gesprächspartner einzusetzen, der Informationen des ersten Gesprächspartners entgegennimmt oder zur Verfügung stellt. Falls der zweite Gesprächspartner Informationen entgegennimmt, ist diese - in welcher Form auch immer - zumeist aufzunehmen, niederzuschreiben oder in einen Computer einzugeben. Dies hat nicht nur hohe Personalkosten zur Folge, sondern nimmt auch sehr viel Zeit in Anspruch, so dass der Gesprächsdurchsatz nicht optimal ist.

Der vorliegenden Erfindung liegt daher die Aufgabe zugrunde, ein Verfahren der gattungsbildenden Art anzugeben und weiterzubilden, bei dem der Gesprächsdurchsatz optimiert wird.

Das erfindungsgemäße Verfahren der gattungsbildenden. Art löst die voranstehende Aufgabe durch die Merkmale des Patentanspruchs 1. Danach ist ein solches Verfahren dadurch gekennzeichnet, dass zumindest teilweise eine Untermenge der Sprachdaten erkannt und extrahiert werden und dass Informationen als Ergebnis der Spracherkennung einem Gesprächspartner zur Verfügung gestellt und/oder gespeichert werden.

Gegenstand der Erfindung ist daher ein Verfahren zur Erkennung von Sprachinformationen aus einem Gespräch zwischen mindestens zwei Gesprächspartnern oder zwischen einem Gesprächspartner und einem Gesprächsannahmesystem, wobei die Sprachdaten des Gesprächs einem Spracherkennungssystem zugeführt werden,
dadurch gekennzeichnet, dass zumindest teilweise eine Untermenge der Sprachdaten erkannt und extrahiert werden und dass Informationen als Ergebnis der Spracherkennung einem Gesprächspartner zur Verfügung gestellt und/oder gespeichert werden.

Bevorzugte Ausführungsformen sind in den Unteransprüchen offenbart.

Erfindungsgemäß ist zunächst erkannt worden, dass Gesprächsannahmesysteme eingesetzt werden können, wenn der erwartete Gesprächsinformationsfluss weitgehend vorbestimmt ist, wenn also ein Gesprächspartner beispielsweise eine Antwort auf eine Frage - ja oder nein, eine Zahl zwischen 1 und 5 etc. - dem Gesprächsannahmesystem mitteilt. In diesem Fall können die Sprachdaten vom Spracherkennungssystem mit einer hohen Erfolgsrate richtig erkannt werden und die entsprechenden Informationen können zur weiteren Verarbeitung gespeichert werden.

Für komplexere Gespräche ist weiterhin erfindungsgemäß erkannt worden, dass anstelle eines Gesprächsannahmesystems ein zweiter Gesprächspartner erforderlich ist, um einen Informationsaustausch garantieren zu können, der nicht durch fehlerbehaftete Spracherkennungssysteme verfälscht wird. Insoweit ist jedoch vorgesehen, dass dem einen Gesprächspartner Hilfestellungen zur Verfügung gestellt werden, die ihm das mühsame und zeitaufwendige Eingeben oder Aufnehmen von Daten erleichtern bzw. abnehmen. Hierzu werden die Sprachdaten des Gesprächs beider Gesprächspartner einem Spracherkennungssystem zugeführt. Es ist auch denkbar, dass die Sprachdaten lediglich eines Gesprächspartners dem Spracherkennungssystem zugeführt werden. Das Spracherkennungssystem führt nun für eine Untermenge der Sprachdaten - z. B. die Sprachdaten lediglich eines Gesprächspartners, ganz allgemein für alle Sprachdaten - die Spracherkennung durch. Selbst wenn diese nur teilweise erfolgreich ist, können die hieraus extrahierbaren Informationen einem Gesprächspartner zur Verfügung gestellt werden. Hierdurch können zumindest nahezu fehlerfrei einfache Daten wie Zahlen oder kurze Antworten auf Fragen vom Spracherkennungssystem erkannt werden, die dem Gesprächspartner sodann in einer speicherbaren Form vorliegen.

In besonders vorteilhafter Weise werden die durch die Spracherkennung gewonnenen Informationen gespeichert, so dass diese beispielsweise einer statistischen Auswertung zu einem späteren Zeitpunkt zugeführt werden können.

Falls ein Gesprächsannahmesystem eingesetzt wird, ist vorgesehen, dass das Gesprächsannahmesystem als ein "Interactive Voice Response System" (IVRS) arbeitet. Ein solches IVRS-System ist in der Lage, mit einem Gesprächspartner - wenn auch in eingeschränktem Rahmen - zu kommunizieren und in Abhängigkeit seiner Spracheingabe entsprechend zur reagieren. Vorzugsweise ist ein automatisch arbeitendes IVRS-System vorgesehen.

In vorteilhafter Weise könnte das Gesprächsannahmesystem automatisch eine Gesprächsverbindung mit einem Gesprächspartner herstellen. Dies könnte beispielsweise durch einen Telefonanruf erfolgen. So könnten beispielsweise einfache Meinungsumfragen automatisch erstellt werden.

Eine hohe Erkennungsrate kann in besonders vorteilhafter Weise dann erzielt werden, wenn der Gesprächspartner, dessen Sprachdaten zu analysieren sind, mit vorgegebenen Gesprächsstrukturen konfrontiert wird. Dies können Erklärungen und/oder Fragen des Gesprächsannahmesystems bzw. eines Gesprächspartners sein, die in dieser Weise dem Spracherkennungssystem schon bekannt sind. Auf die gezielten Fragen bzw. die vorgegebenen Gesprächsstrukturen wird dann sehr wahrscheinlich der damit konfrontierte Gesprächspartner in der Regel "erwartungsgemäß" reagieren, so dass aus dieser erwartungsgemäßen Reaktion die darin enthaltene Information mit hoher Wahrscheinlichkeit richtig erkannt und dementsprechend extrahiert bzw. abgespeichert werden kann. Insoweit könnte hier in besonders vorteilhafter Weise zur Spracherkennung die Methode der Grammatikerkennung eingesetzt werden.

Zur praktischen Realisierung eines Gesprächsannahmesystems und/oder eines Spracherkennungssystems ist vorgesehen, dass mindestens ein Computer eingesetzt wird. Hierbei kann es sich bei dem Gesprächsannahmesystem und bei dem Spracherkennungssystem um ein und denselben Computer handeln, grundsätzlich ist jedoch vorgesehen, dass lediglich ein Computer als Gesprächsannahmesystem eingesetzt wird. Die Sprachdaten des Gesprächs werden dann einem anderen Computer zugeleitet, auf dem das Spracherkennungssystem implementiert ist. Ein solcher Computer sollte hinreichende Leistungsdaten aufweisen. Darüber hinaus weist ein als Gesprächsannahmesystem eingesetzter Computer eine Schnittstelle zum Aufbauen einer Telefon- und/oder Videoverbindung auf. Eine weitere Schnittstelle ist vorgesehen, über die Sprach- bzw. und Videodaten ein- bzw. ausgegeben zu werden.

Die Spracherkennung selbst könnte auf einem oder auf mehreren Computern ausgeführt werden. Insbesondere bei zeitkritischen Anwendungen wird die Spracherkennung vorzugsweise auf mehreren Computern vorzugsweise parallel ausgeführt. So könnte beispielsweise der Spracherkennungsprozess in mehrere Teilprozesse aufgeteilt werden, wobei jeder Teilprozess auf einem Computer ausgeführt wird. Bei der Unterteilung in Teilprozesse könnten jedem Teilprozess einzelne Sätze oder Nebensätze zugeordnet werden, eine zeitliche Aufteilung der Sprachdaten - beispielsweise in Zeitintervalle von jeweils 5 Sekunden - wäre ebenfalls denkbar. Falls der Computer mehrere Prozessoren (CPUs) aufweist, könnten die Teilprozesse auf die Prozessoren des Computers verteilt parallel ausgeführt werden.

Falls die Rechenleistung eines einzelnen Computers zur Spracherkennung und/oder für das Gesprächsannahmesystem nicht ausreicht, könnte ein Computer-Netzwerksystem vorgesehen sein, so dass diese Aufgaben auf mehreren Computern parallel ausführt werden. Insbesondere könnten einzelne Computer des Netzwerksystems spezielle, unterschiedliche Spracherkennungsmodi ausführen, so dass jeder Computer die gleichen Sprachdaten unter einem anderen Gesichtspunkt analysiert.

In ganz besonders bevorzugter Weise werden die Sprachdaten des Gesprächs zumindest weitgehend unverändert gespeichert. Das Abspeichern könnte hierbei sämtliche Sprachdaten des Gesprächs umfassen. Falls beispielsweise ein Gesprächspartner oder das Gesprächsannahmesystem vorgegebene, dem Spracherkennungssystem bekannte Gesprächsstrukturen verwendet, könnten lediglich die Sprachdaten des anderen Gesprächspartners abgespeichert werden. Grundsätzlich ist bei dem Speichervorgang vorgesehen, zusätzlich zu den Sprachdaten Marker bzw. Bookmarks abzuspeichern, so dass das abzuspeichernde Gespräch hierdurch sinnzusammenhängend oder logisch unterteilt wird. Diese Unterteilung könnte bei einer nachfolgenden Sprachdatenerkennung den Vorgang der Informationsextraktion beschleunigen oder vereinfachen.

Weiterhin ist vorgesehen, dass Informationen über den aktuellen Gesprächszustand bei der Spracherkennung berücksichtigt werden. So könnte beispielsweise zu Beginn des Gesprächs der Umstand berücksichtigt werden, dass die beiden Gesprächspartner sich gegenseitig identifizieren, so dass eine Spracherkennung hierzu entsprechende Vokabel- bzw. Grammatikerkennungsmodi einsetzt. Diese Informationen über den aktuellen Gesprächszustand, wie auch immer diese gewonnen werden, könnten ebenfalls zusammen mit den -Sprachdaten gespeichert werden.

Insbesondere bei der Auswertung von Sprachdaten, die von einem Gesprächsannahmesystem aufgezeichnet worden sind, könnte eine Spracherkennung individuell auf einen Analyseauftrag ausgerichtet sein. So könnte beispielsweise eine Zuschauerumfrage oder ein Zuhörerquiz einer Fernseh- oder Radiosendung automatisch dahingehend ausgewertet werden, welche politische Maßnahme beispielsweise bei den Zuschauern bzw. in der Zuhörerschaft eine höhere Akzeptanz hat. Hierbei könnte als Analyseauftrag beispielsweise vorgegeben sein, herauszufinden, ob Maßnahme A oder Maßnahme B bevorzugt wird, so dass die Information und die Kenntnis der möglichen Varianten der Umfrage bei der Spracherkennung berücksichtigt bzw. der Spracherkennung als zusätzliche Information zur Verfügung gestellt werden.

Falls die Sprachdaten von einem Gespräch zwischen zwei Gesprächspartnern stammen, ist in ganz besonders bevorzugter Weise vorgesehen, dass die Spracherkennung individuell auf einen Analyseauftrag ausgerichtet wird. Dieser könnte beispielsweise die Spracherkennung der Sprachdaten hauptsächlich von einem der beiden Gesprächspartner umfassen, wobei die Analyse hierbei beispielsweise speziell auf die Erkennung der Telefonnummer des einen Anrufers oder Ähnliches gerichtet sein kann.

Als Methoden zur Spracherkennung sind die Diktat-, Grammatik-, Einzelworterkennung und/oder das Keyword-Spotting vorgesehen. Hierbei könnte beispielsweise in Abhängigkeit des aktuellen Gesprächszustands von der einen Spracherkennungsmethode auf die andere Spracherkennungsmethode umgeschaltet werden, wenn absehbar ist, dass eine andere Spracherkennungsmethode für den aktuellen Gesprächszustand die besseren Ergebnisse bei der Spracherkennung verspricht. Vorzugsweise könnten die unterschiedlichen Methoden der Spracherkennung auch parallel eingesetzt werden, was beispielsweise auf mehrere Computer parallel verteilt durchgeführt wird.

Ganz besonders bevorzugt ist vorgesehen, die Spracherkennung wiederholt auszuführen. Hierzu ist es möglich, die Sprachdaten bzw. die zumindest weitgehend unverändert gespeicherten Sprachdaten eines Gesprächs wiederholt unterschiedlichen oder gleichen Spracherkennungsprozessen zuzuführen. Eine wiederholte Spracherkennung ist insbesondere bei einem Offline-Erkennungssystem vorgesehen, da hier eine Zeitverzögerung der Spracherkennung möglich ist.

Für eine weitere Spracherkennungsstrategie ist vorgesehen, eine dynamische Anpassung der Spracherkennung vorzunehmen. Hierbei könnte beispielsweise das Vokabular zur Spracherkennung variiert und/oder angepasst werden. So könnte eine zunächst eingesetzte Spracherkennungsmethode - beispielsweise die Diktaterkennung-eine geringe Erkennungsrate ergeben, so dass abzusehen ist, dass die Beibehaltung der Diktaterkennung nur wenig Aussicht auf Erfolg haben wird. Sodann ist vorgesehen, dynamisch eine andere Spracherkennungsmethode einzusetzen, wobei auch bei der neu eingesetzten Sprachmethode sofort die Erkennungsrate analysiert wird und gegebenenfalls ein weiterer dynamischer Spracherkennungsschritt folgt. Hierbei könnte auch vorgesehen sein, auf mehreren Computern parallel die gleiche Spracherkennungsmethode auf die Sprachdaten anzuwenden, jedoch wird auf jedem Computer ein anderes Vokabular zur Spracherkennung eingesetzt. Eine unmittelbare Analyse der Erkennungsrate dieser parallel verlaufenden Spracherkennungsprozesse kann eine dynamische Anpassung bzw. Steuerung der weiteren Spracherkennung zur Folge haben.

Zusätzlich oder alternativ ist ein ganz besonders bevorzugter Verfahrensschritt vorgesehen, der unter dem Oberbegriff "Vokabulardynamisierung" zusammengefasst werden kann. Hierbei werden die Sprachdaten mehrmals analysiert. In einem ersten Erkennungsschritt werden die Sprachdaten klassifiziert. Hierzu könnten beispielsweise Methoden des Keyword-Spotting eingesetzt werden. In Abhängigkeit des Ergebnisses der Sprachdatenklassifizierung werden die Sprachdaten in einem weiteren Erkennungsschritt unter Hinzuziehung von speziellem Vokabular erneut untersucht. Hierbei wird dem Erkennungsvorgang ein Vokabular zugrundegelegt, das in direktem oder im näheren Zusammenhang mit dem Ergebnis des Sprachdatenklassifizierungsschritts liegt. Hierbei ist es durchaus denkbar, dass dem Erkennungsschritt der Sprachdaten ein Vokabular aus mehreren speziellen Bereichen zugrundegelegt wird. Dieser weitere Erkennungsschritt wird vorzugsweise auf die ursprünglichen Sprachdaten angewandt, wobei jedoch die im ersten Erkennungsschritt gewonnenen Informationen hinzugezogen werden können. Demgemäss werden die Verfahrensschritte der Vokabulardynamisierung immer wieder auf die ursprünglichen Sprachdaten angewandt.

Im folgenden werden iterativ weitere Erkennungsschritte durchgeführt, die im Idealfall zur vollständigen Erkennung der gesamten Sprachdaten oder zumindest einer Untermenge der Sprachdaten führt. Die weiteren iterativen Erkennungsschritte werden vorzugsweise über Erkennungswahrscheinlichkeiten gesteuert, so dass hierdurch beispielsweise ein Abbruchkriterium für weitere Erkennungsschritte gegeben sein kann, wenn z. B. sich die Erkennungswahrscheinlichkeit nicht mehr ändert.

In ganz besonders bevorzugter Weise ist vorgesehen, dass das Spracherkennungssystem und/oder der Spracherkennungsvorgang mit einem Datenbanksystem, wie z. B. R/3, und/oder Expertensystem gekoppelt wird. Hierdurch können die Ergebnisse oder die Teilergebnisse des Spracherkennungsvorgangs direkt in ein Datenbank und/oder Expertensystem eingegeben werden. Weiterhin können Informationen aus dem Datenbank- und/oder Expertensystem zum Spracherkennungsvorgang hinzugezogen werden, beispielsweise zur Vokabulardynamisierung. So können durch diese Kopplung weitergehende Informationen extrahiert werden, die - wie bereits angedeutet - zur Spracherkennung genutzt werden.

Die aus dem Datenbank- und/oder Expertensystem gewonnen Informationen können zur Steuerung des dynamischen Erkennungsvorgangs der Spracherkennung eingesetzt werden. So könnten beispielsweise Informationen, die in einem Datenbank- bzw. R/3-System über einen Gesprächspartner abgelegt sind, den Erkennungsvorgang der von diesem Gesprächspartner vorliegenden Sprachdaten dahingehend zur Steuerung eingesetzt werden, dass zur Spracherkennung Vokabular zugrundegelegt wird, das bereits in vorangegangenen Gesprächen mit diesem Gesprächspartner eingesetzt wurde. Hierbei können auch die während dem aktuellen Gespräch erkannten Sprachdaten in das Datenbank- bzw. R/3-System oder in eine entsprechende Datenbank abgespeichert werden und-schon während des Gesprächs - den Vokabelschatz dieses Gesprächspartners bei der Spracherkennung dynamisch erweitern.

Nun ist grundsätzlich vorgesehen, die insbesondere aus der Sprachdatenerkennung gewonnenen Informationen zu speichern. In ganz besonderes bevorzugter Weise ist zusätzlich oder alternativ hierzu vorgesehen, Informationen in Form einer grafischen und/oder orthographischen Repräsentation zur Verfügung zu stellen. Dies kann für Informationen vorgesehen sein, die gegebenenfalls zeitversetzt von einem mit einem Gesprächsannahmesystem aufgezeichneten Gespräch stammen. Dies könnte allerdings auch für Informationen einer Spracherkennung von Gesprächsdaten zutreffen, die von einem Gespräch zwischen zwei oder mehreren Gesprächspartnern stammen. Hierbei können entweder alle Informationen des Gesprächs, d.h. sozusagen jedes Wort, oder lediglich extrahierte und/oder selektierte Informationen hieraus, die für die jeweilige Anwendung des erfindungsgemäßen Verfahrens gerade zweckmäßig sind, angezeigt werden. Das zur Verfügung Stellen der Informationen könnte beispielsweise auf einer Ausgabeeinheit eines Computers, z. B. eines Monitors, auf einem Bildschirm oder Fernseher erfolgen. Auch die Ausgabe der Informationen auf einem Handy-Display könnte vorgesehen sein.

Ganz allgemein ist vorgesehen, die Informationen zeitversetzt zur Verfügung zu stellen. Dies wird insbesondere bei Gesprächsinformationen der Fall sein, die von einem Gesprächsannahmesystem stammen, wo also eine zeitgleiche Spracherkennung bzw. Informationsauswertung nicht erforderlich ist. Alternativ hierzu ist in bevorzugter Weise vorgesehen, die Informationen nahezu zeitgleich, d.h. "Online" zu erkennen und/oder dem Gesprächspartner zur Verfügung zu stellen. Dies ist insbesondere dann der Fall, wenn Sprachdaten eines Gesprächs zwischen zwei Gesprächspartnern erkannt bzw. analysiert werden. Hierbei können die Informationen entweder einem oder beiden bzw. allen Gesprächspartnern zur Verfügung gestellt werden, je nach dem welches Ziel die Anwendung des erfindungsgemäßen Verfahrens verfolgt. Das Online zur Verfügung Stellen der Informationen könnte allerdings auch in Verbindung mit einem Gesprächsannahmesystem erfolgen, beispielsweise wenn bei einer Rundfunk- oder Fernsehsendung eine "Live-Umfrage" nach nur kurzer Zeit ausgewertet sein muss.

Nun könnte der Gesprächspartner, dem die Informationen während des Gesprächs zur Verfügung gestellt werden, die Spracherkennung zumindest teilweise vorgeben, steuern und/oder lenken. Hierzu könnten auf einer grafischen Benutzeroberfläche eines entsprechenden Computers bzw. Steuerrechners entsprechende Symbole vorgesehen sein, die unterschiedliche Wirkungen auf die Spracherkennung haben und einfach und schnell vom dem Gesprächspartner betätigt werden können. Insbesondere könnte hierbei vorgesehen sein, dass der Gesprächspartner entsprechende Symbole betätigen kann, die mehrere, vom Spracherkennungssystem kommende Ergebnisse als richtig oder falsch klassifizieren bzw. auswählen können. Letztendlich kann so der eine Gesprächspartner hierdurch das Erkennungssystem auf die Stimme des anderen Gesprächspartners schulen, so dass bei einem länger andauernden Gespräch das Spracherkennungssystem zumindest weitgehend die Sprachdaten des anderen Gesprächspartners erkennen kann. Weiterhin können entsprechende Symbole vorgesehen sein, die eine Annahme oder Ablehnung von abzuspeichernden Informationen als Ergebnis der Spracherkennung zur Folge haben.

Weiterhin könnte beispielsweise vorgesehen sein, dass der Gesprächspartner das Vokabular für die Spracherkennung, oder die Reihenfolge der Anwendung der unterschiedlichen Spracherkennungsmethoden vorgibt.

Insbesondere bei einer Kopplung des Spracherkennungssystems mit einem Datenbank- und/oder Expertensystem könnte vorgesehen sein, dass für jeden Gesprächspartner ein Benutzerprofil angelegt oder schon abgespeichert ist. Zur Spracherkennung eines weiteren Gesprächs mit diesem Gesprächspartner könnte dieses Benutzerprofil automatisch geladen werden. Darüber hinaus ist auch denkbar, dass der Gesprächspartner, dem die Informationen zur Verfügung gestellt werden, dieses Benutzerprofil lädt. In einem Benutzerprofil kann insbesondere der Erkennungsmodus der Spracherkennung, ein spezieller Vokabularschatz oder ähnliches abgespeichert sein.

In besonders bevorzugter Weise werden neben den extrahierten Sprachinformationen noch Informationen des Datenbank- und/oder Expertensystems extrahiert zur Verfügung gestellt. Diese Vorgehensweise könnte beispielsweise im Einsatz eines Call-Centers angewandt werden. Hierbei ist der das Gespräch entgegennehmende Gesprächspartner, im folgenden Agent genannt, derjenige, dem die extrahierten Informationen zur Verfügung gestellt werden. So können dem Agent neben den erkannten und extrahierten Informationen aus dem Spracherkennungsprozess auch weitergehende Informationen, beispielsweise über den Anrufer, dessen Tätigkeitsfeld u.s.w. ebenfalls zur Verfügung gestellt werden, so dass in besonders vorteilhafter Weise der Agent noch vor Beendigung des Gesprächs mehr Informationen erhält, als eigentlich in dem Gespräch ausgetauscht wurden. Hierdurch kann der Agent auch andere Themengebiete ansprechen, die nicht vom Anrufer aus angesprochen sind, wodurch dem Anrufer in besonders vorteilhafter Weise das Gefühl vermittelt wird, dass der Agent des Call-Centers den Anrufer nebst seinem Tätigkeitsgebiet persönlich kennt. Durch diese Vorgehensweise kann auch in vorteilhafter Weise eine Beratung des Anrufers intensiver und/oder effektiver durchgeführt werden.

Zur einfachen Bedienung durch einen Gesprächspartner könnten die entsprechenden Ausgabemodule für die extrahierten Informationen und/oder die Symbole für die Steuerung bzw. Lenkung der Spracherkennung in eine Gesamtoberfläche und/oder in ein Gesamtprogramm eines Computerprogramms eingebunden sein. Hierdurch hat beispielsweise ein Agent eines Call-Centers lediglich eine zentrale Anwendung bzw. ein zentrales Programm zu bedienen, so dass letztendlich auch hierdurch die Effizienz des Gesamtsystems erhöht wird.

Das erfindungsgemäße Verfahren könnte in weiter vorteilhafter Weise zum Schulen von Agenten eines Call-Centers eingesetzt werden. So könnte beispielsweise gerade aufgrund der Informationen, die über einen Anrufer in einem Datenbankund/oder Expertensystem gespeichert sind, die Gesprächsstrategie des Agenten geschult werden. Ein Ziel hierbei könnte beispielsweise sein, dass der Agent eines Call-Centers einerseits lernt ein erfolgreiches Verkaufsgespräch mit einem Anrufer zu absolvieren und andererseits wichtige Daten über den Anrufer - entweder bereits gespeicherte oder in dem Gespräch gewonnene Informationen - dem Gesamtsystem zuzuführen oder in dem Gesamtsystem abzuspeichern, so dass auch die Schnelligkeit eines Agenten eines Call-Centers in der Gesprächsabwicklung geschult werden kann.

In ganz besonders vorteilhafter Weise wird das Spracherkennungssystem auf die Stimme eines Gesprächspartners trainiert. Im Fall eines Call-Centers ist dies der Agent des Call-Centers, der praktisch bei jedem Gespräch mit dem Spracherkennungssystem interagiert. Somit können zumindest die Sprachdaten des einen Gesprächspartners bzw. des Agents mit einer optimierten Erkennungsrate erkannt und/oder analysiert werden. Die Erkennungsrate des Spracherkennungssystems kann in weiter vorteilhafter Weise auch dadurch gesteigert werden, dass der eine Gesprächspartner bzw. der Agent des Call-Centers einzelne, für den Gesprächspartner bzw. Agent wichtige Worte wiederholt. Somit kann das Spracherkennungssystem diese nunmehr vom Gesprächspartner, auf den das Spracherkennungssystem trainiert ist, mit einer hohen Erkennungsrate richtig erkannt bzw. analysiert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung einer ersten Konfiguration zur Durchführung des erfindungsgemäßen Verfahrens,
- Fig. 2: eine schematische Darstellung einer zweiten Konfiguration zur Durchführung des erfindungsgemäßen Verfahrens,
- Fig. 3: eine schematische Darstellung eines Ausführungsbeispiels eines Spracherkennungssystems und
- Fig. 4: eine schematische Darstellung einer weiteren Konfiguration zur Durchführung des erfindungsgemäßen Verfahrens.

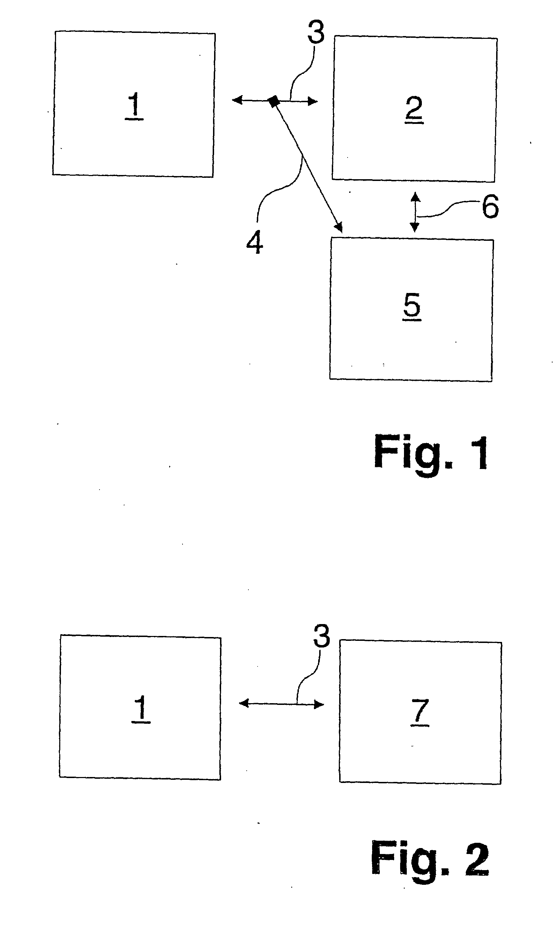

Fig. 1 zeigt schematisch zwei Gesprächspartner 1, 2, wobei die beiden Gesprächspartner 1, 2 ein Telefongespräch führen. Die Telefonverbindung ist mit dem Bezugszeichen 3 angedeutet. Sprachdaten des Gesprächs wird über die Verbindung 4 einem Spracherkennungssystem 5 zugeführt.

Erfindungsgemäß wird zumindest eine Untermenge der Sprachdaten erkannt und extrahiert. Das Ergebnis der Spracherkennung wird dem Gesprächspartner 2 über Verbindung 6 zur Verfügung gestellt.

In Fig. 2 ist eine Konfiguration gezeigt, bei der ein Gesprächspartner 1 mit einem Gesprächsannahmesysteme 7 ebenfalls über eine Telefonverbindung 3 telefoniert. Das Gesprächsannahmesystem 7 ist hierbei als ein automatisches Interactive Voice Response System ausgeführt. Die Spracherkennung sowie die Speicherung einerseits der Sprachdaten und andererseits der hieraus extrahierten Informationen ist ebenfalls in dem Gesprächsannahmesystem 7 vorgesehen. Das Gesprächsannahmesystem 7 ist ein Computer.

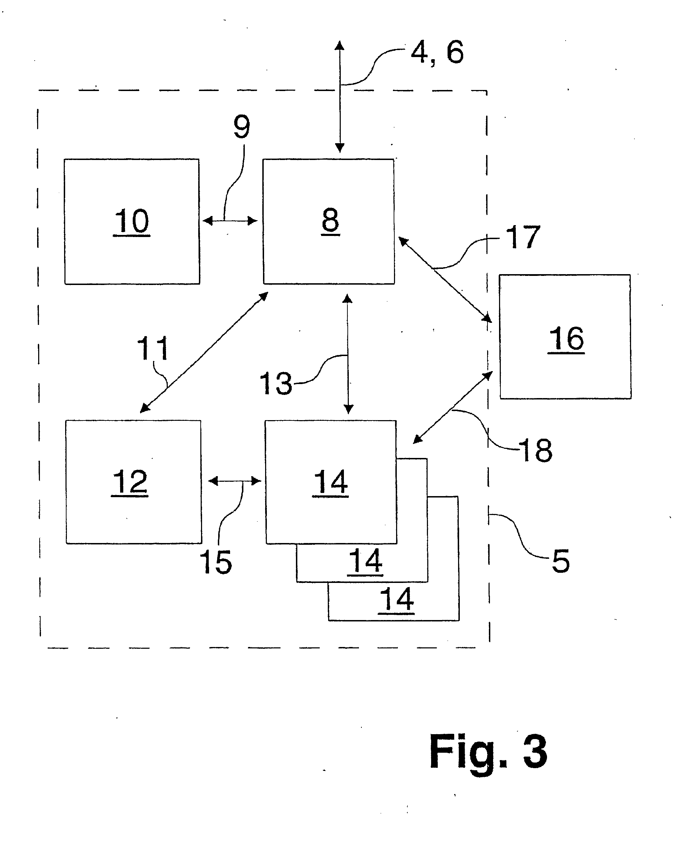

Bei dem Spracherkennungssystem 5 handelt es sich um mehrere Computer, die in Fig. 3 schematisch gezeigt sind. Im Konkreten handelt es sich um ein Computer-Netzwerksystem, auf dem die Spracherkennung parallel ausgeführt wird. Die Sprachdaten werden über die Verbindung 4 dem Spracherkennungssystem 5 zugeführt. Die Sprachdaten werden von dem Eingangs-/Ausgangsserver 8 über das Netzwerk weiterverteilt. So werden die Sprachdaten über Verbindung 9 einem Datenspeicher 10 zugeführt. Weiterhin werden die Sprachdaten über Verbindung 11 dem Baseform-Server 12 sowie über Verbindung 13 den drei Recognition-Servern 14 zugeführt. Der Baseform-Server 12 dient hierbei zur Bereitstellung der erforderlichen phonetischen Aussprachetranskriptionen. Über Verbindung 15 ist ebenfalls ein Sprachdatenaustausch zwischen Baseform-Server 12 und den drei Recognition-Servern 14 vorgesehen.

Die Spracherkennung auf den Recognition-Servern 14 wird hierbei parallel ausgeführt, und zwar führt einer der drei Recognition-Server 14 eine Diktaterkennung, der andere Recognition-Server 14 eine Grammatikerkennung und schließlich der dritte Recognition-Server 14 eine Keyword-Spotting-Erkennung aus. Demgemäss werden die drei unterschiedlichen Methoden der Spracherkennung quasi parallel eingesetzt, die unterschiedlichen Spracherkennungsmethoden benötigen geringfügig unterschiedliche Rechenzeiten, so dass keine zeitgleiche Parallelisierung im strengen Sinn vorliegt.

Falls die Spracherkennung wiederholt ausgeführt wird, werden die auf dem Datenspeicher 10 gespeicherten Original-Sprachdaten des Gesprächs von dem Eingangs/Ausgangsserver 8 angefordert und erneut auf den Baseform-Server 12 und die Recognition-Server 14 verteilt.

In vorteilhafter Weise ist das Spracherkennungssystem 5 sowie der Spracherkennungsvorgang mit einem Datenbanksystem 16 über die Verbindungen 17, 18 gekoppelt. Durch diese Kopplung werden weitergehende Informationen extrahiert. So werden die aus dem Datenbanksystem 16 gespeicherten und abgerufenen Informationen über den Gesprächspartner 1 dazu verwendet, den Spracherkennungsvorgang zu unterstützen. Hierzu wird dem Recognition-Server 14, auf dem die Diktaterkennung läuft, ein Vokabular zur Verfügung gestellt, das auf dem Datenbanksystem 16 gespeichert ist und im Rahmen eines vorherigen Gesprächs mit dem Gesprächspartner 1 in Verbindung gebracht wurde.

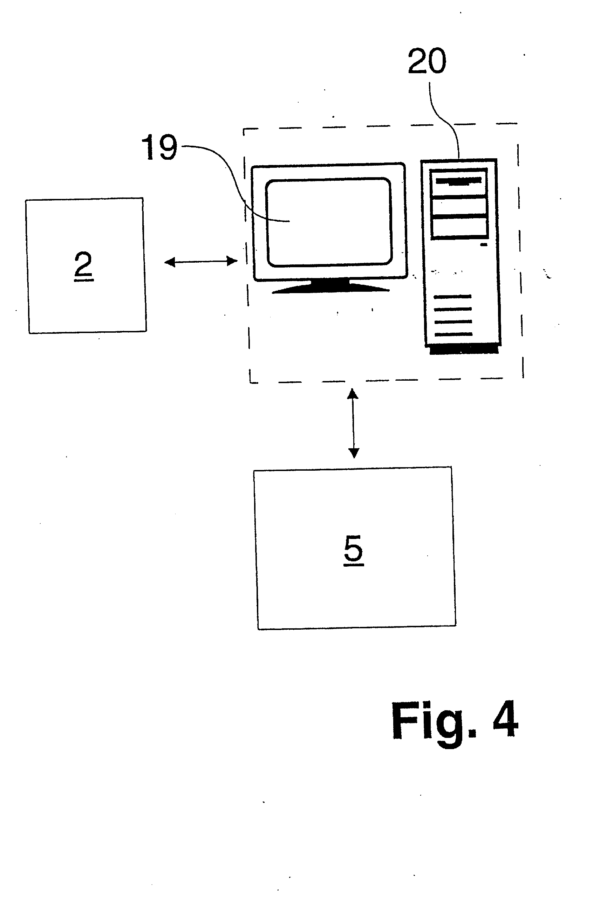

In Fig. 4 ist schematisch gezeigt, dass dem Gesprächspartner 2 die Informationen des Spracherkennungssystems 5 nebst den Informationen des Datenbanksystems in Form einer graphischen und orthographischen Repräsentation auf dem Monitor 19 des Computers 20 zur Verfügung gestellt werden. Die Repräsentation der Informationen erfolgt hierbei während des Gesprächs.

Der Gesprächspartner 2 kann ebenfalls über den Computer 20 bei dem Spracherkennungsvorgang eingreifen und diesen derart steuern, dass ein optimales Spracherkennungsergebnis erzielt werden kann. Sowohl die graphische und orthographische Repräsentation der extrahierten Sprachinformationen als auch die Steuerung des Spracherkennungsvorgangs erfolgt mit einer Benutzerschnittstelle, die auf dem Computer 20 nebst Monitor 19 dem Gesprächspartner 2 zur Verfügung steht. Hierdurch kann der als Agent eingesetzte Gesprächspartner 2 in einem Call-Center eine optimale Anruferberatung durchführen.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Verfahren zur Erkennung von Sprachinformationen aus einem Gespräch zwischen mindestens zwei Gesprächspartnern (1, 2) oder zwischen einem Gesprächspartner (1) und einem Gesprächsannahmesystem (7), wobei die Sprachdaten des Gesprächs einem Spracherkennungssystem (5) zugeführt werden,
**dadurch gekennzeichnet, dass** zumindest teilweise eine Untermenge der Sprachdaten erkannt und extrahiert werden und dass Informationen als Ergebnis der Spracherkennung einem Gesprächspartner (2) zur Verfügung gestellt und/oder gespeichert werden.

2. Verfahren nach Anspruch 1, wobei das Gesprächsannahmesystem (7) als ein Interactive Voice Response System (IVRS), vorzugsweise als ein automatisches IVRS, arbeitet.

3. Verfahren nach Anspruch 1 oder 2, wobei das Gesprächsannahmesystem (7) automatisch eine Gesprächsverbindung mit einen Gesprächspartner (1) herstellt, vorzugsweise durch einen Telefonanruf.

4. Verfahren nach einem der Ansprüche 1 bis 3, wobei der Gesprächspartner (1) mit vorgegebenen Gesprächsstrukturen konfrontiert wird.

5. Verfahren nach einem der Ansprüche 1 bis 4, wobei als Gesprächsannahmesystem (7) und/oder als Spracherkennungssystem (5) mindestens ein Computer eingesetzt wird.

6. Verfahren nach Anspruch 5, wobei die Spracherkennung auf einem oder auf mehreren Computern (12, 14) ausgeführt wird, vorzugsweise parallel.

7. Verfahren nach Anspruch 5 oder 6, wobei die Spracherkennung in Form von mehreren Prozessen auf einem Computer oder verteilt auf mehrere Prozessoren eines Computers parallel ausgeführt wird.

8. Verfahren nach einem der Ansprüche 5 bis 7, wobei die Spracherkennung in einem Computer-Netzwerksystem parallel ausgeführt wird.

9. Verfahren nach einem der Ansprüche 1 bis 8, wobei die Sprachdaten des Gesprächs zumindest weitgehend unverändert gespeichert werden.

10. Verfahren nach einem der Ansprüche 1 bis 9, wobei Informationen über den aktuellen Gesprächszustand bei der Spracherkennung berücksichtigt werden.

11. Verfahren nach einem der Ansprüche 1 bis 10, wobei die Spracherkennung individuell auf einen Analyseauftrag ausgerichtet wird.

12. Verfahren nach einem der Ansprüche 1 bis 11, wobei zur Spracherkennung Methoden der Diktat-, Grammatik-, Einzelworterkennung und/oder des Keyword-Spotting eingesetzt werden.

13. Verfahren nach Anspruch 12, wobei die unterschiedlichen Methoden der Spracherkennung parallel eingesetzt werden.

14. Verfahren nach einem der Ansprüche 1 bis 13, wobei die Spracherkennung wiederholt ausgeführt wird.

15. Verfahren nach einem der Ansprüche 1 bis 14, wobei eine dynamische Anpassung der Spracherkennung erfolgt.

16. Verfahren nach Anspruch 15, wobei das Vokabular zur Spracherkennung variiert und/oder angepasst wird.

17. Verfahren nach Anspruch 15 oder 16, wobei zur dynamischen Anpassung der Spracherkennung in einem ersten Erkennungsschritt die Sprachdaten klassifiziert werden, vorzugsweise mit Methoden des Keyword-Spotting.

18. Verfahren nach Anspruch 17, wobei in einem weiteren Erkennungsschritt die Sprachdaten unter Hinzuziehung von speziellem Vokabular erneut untersucht werden.

19. Verfahren nach Anspruch 18, wobei iterativ weitere Erkennungsschritte durchgeführt werden, die vorzugsweise über Erkennungswahrscheinlichkeiten gesteuert werden.

20. Verfahren nach einem der Ansprüche 1 bis 19, wobei das Spracherkennungssystem und/oder der Spracherkennungsvorgang mit einem Datenbanksystem (16) und/oder Expertensystem gekoppelt wird.

21. Verfahren nach Anspruch 20, wobei durch die Kopplung weitergehende Informationen extrahiert werden.

22. Verfahren nach Anspruch 21, wobei die aus dem Datenbanksystem (16) und/oder Expertensystem gewonnenen Informationen, beispielsweise über den Gesprächspartner (1), den Spracherkennungsvorgang dynamisch steuern.

23. Verfahren nach einem der Ansprüche 1 bis 22, wobei die Informationen in Form einer graphischen und/oder orthographischen Repräsentation zur Verfügung gestellt werden.

24. Verfahren nach einem der Ansprüche 1 bis 23, wobei die Informationen zeitversetzt zur Verfügung gestellt werden.

25. Verfahren nach einem der Ansprüche 1 bis 23, wobei die Informationen nahezu zeitgleich (online) erkannt und/oder dem Gesprächspartner (2) zur Verfügung gestellt werden.

26. Verfahren nach einem der Ansprüche 4 bis 25, wobei die Informationen während des Gesprächs dem Gesprächspartner (2) zur Verfügung gestellt werden.

27. Verfahren nach einem der Ansprüche 4 bis 26, wobei der Gesprächspartner (2) die Spracherkennung zumindest teilweise vorgibt, steuert und/oder lenkt.

28. Verfahren nach einem der Ansprüche 4 bis 27, wobei der Gesprächspartner (2) die Erkennungsmodi in Form von Benutzerprofilen laden kann oder dass diese automatisch geladen werden.

29. Verfahren nach einem der Ansprüche 1 bis 28, wobei neben den extrahierten Sprachinformationen noch Informationen des Datenbanksystems (16) und/oder Expertensystems extrahiert und/oder zur Verfügung gestellt werden.

30. Verfahren nach einem der Ansprüche 1 bis 29, **gekennzeichnet durch** den Einsatz in einem Call-Center.

31. Verfahren nach einem der Ansprüche 1 bis 30, **gekennzeichnet durch** die Einbindung in eine Gesamtoberfläche und/oder in ein Gesamtprogramm.

32. Verfahren nach einem der Ansprüche 1 bis 31, **gekennzeichnet durch** den Einsatz zum Schulen von Agenten eines Call-Centers:

33. Verfahren nach einem der Ansprüche 1 bis 32, wobei das Spracherkennungssystem (5) auf die Stimme eines Gesprächspartners (2) trainiert wird, vorzugsweise auf den Agent eines Call-Centers.

34. Verfahren nach Anspruch 33, wobei die Erkennungsrate des Spracherkennungssystems (5) dadurch gesteigert wird, dass der eine Gesprächspartner (2) - vorzugsweise der Agent - einzelne, vom anderen Gesprächspartner (1) gesprochene Worte wiederholt, so dass das Spracherkennungssystem (5) die Sprachdaten der trainierten Stimme analysieren kann.
